Europäisches Patentamt

(19) European Patent Office

Office européen des brevets

(11) Publication number : **0 255 562 B1**

(12) **EUROPEAN PATENT SPECIFICATION**

(45) Date of publication of patent specification :
30.01.91 Bulletin 91/05

(51) Int. Cl.⁵ : **A23F 5/10**

(21) Application number : **86830227.4**

(22) Date of filing : **04.08.86**

(54) **Improvements in a process for treating roasted coffee and in a plant for carrying out the process.**

(43) Date of publication of application :
10.02.88 Bulletin 88/06

(45) Publication of the grant of the patent :
30.01.91 Bulletin 91/05

(84) Designated Contracting States :
**AT BE CH DE FR GB IT LI LU NL SE**

(56) References cited :
**EP-A- 0 092 803**
**GB-A- 415 656**
**GB-A- 1 024 214**
**US-A- 2 037 037**
**US-A- 2 136 154**

(73) Proprietor : **ILLYCAFFE S.p.A.**
**Via Flavia, 110**
**I-34147 Trieste (IT)**

(72) Inventor : **Illy, Ernesto**
**Via Flavia 110**
**I-34147 Trieste (IT)**

(74) Representative : **Ferraiolo, Ruggero et al**
**Via Napo Torriani, 10**
**I-20124 Milano (IT)**

EP 0 255 562 B1

## Description

By the European Patent 0 092 803 the Applicant disclosed a process for treating roasted coffee and a plant for carrying out the same process.

The disclosed process comprises two steps. A first one in which the roasted coffee is delivered into one or more air-tight seasoning containers where a stream of $CO_2$ or of $N_2$ is blown in, in order to remove most of the air therefrom and to keep the $O_2$ percentage between 0,2% and 1% ; the internal gas pressure in the seasoning container or containers is kept between 1 and 1,8 Atm ; the roasted coffee stands in the seasoning container or containers through up to about twentyone days in a controlled $O_2$ ambient. A second step in which the coffee seasoned during the first step is passed in one or more stabilization containers where the coffee stands in a humidified air stream through a few hours.

The plant comprises one or more air-tight seasoning containers whereto the roasted coffee is delivered ; controlled inlet means for the gas coming in and from the seasoning container or containers ; means for controlling the pressure in the seasoning container or containers ; a pressurized $CO_2$ source or a pressurized $N_2$ source that is connected through the above inlet means with the interior of the seasoning container or containers ; means that allow the roasted coffee to come out after the stationing in the seasoning container or containers ; means that allow the seasoned coffee to pass into a centrifugal separator to separate coffee and air ; a valve for allowing the coffee to pass into a distributor and then into one or more stabilization containers.

A drawback in the process and in the plant as disclosed by the European Patent 0 092 803 is the coffee long stationing in the seasoning container or containers. The about twentyone days through which the coffee and the plant are engaged involve the use of a very capable plant for treating at the same time large quantities of coffee.

The improvements according to the invented process and plant obviate the above described drawback.

In order to get the following specification and claims easier, it is assumed that the process is carried out in one seasoning container only, instead of one or more seasoning containers.

The inventor found that by performing the known process in a seasoning container in which the coffee is kept in a determined gap of temperatures higher than room temperature with maximum $O_2$ of 2% the process duration is shortened and the roasted coffee quality is even the best.

Generally, an expert could expect that temperatures higher than room temperature should accelerate a great part of the physical and chemical changes in the roasted coffee. However what could not be known was the gap of temperatures higher than the room temperature within which the coffee could be treated so as to obtain, on one hand, a valuable reduction of the process duration and, on the other hand, still a best quality product.

The invented process comprises, as it is known, a first step divided into two stages, in which coffee is seasoned in an air-tight seasoning container, and a second step in which the seasoned coffee is stabilized in stabilization containers that are opened to a flow of air and during the first stage, said roasted coffee being delivered into the seasoning container, then pressurized $CO_2$ or $N_2$ being delivered into the seasoning container for removing most of the air from the interior of the container. During the second stage the gas pressure in the interior of the seasoning container being got immediately to at least 0,4 Atm and then being able to be raised and kept at up to 1,8 Atm, characterized in that the $O_2$ percentage in the seasoning container is kept between 0,2% and 2% and that during the first step of the process the roasted coffee in the seasoning container is kept at a desired temperature between 30°C and 50°C through a time period of between ten to four days, of ten days if the temperature of the coffee is 30°C or of a lower number of days inversely proportional to the temperature of the coffee, so of four days if the temperature of the coffee is 50°C. Preferably the roasted coffee is kept in the seasoning container at a temperature of 40°C through about seven days.

The plant according to the invention comprises, as it is known, means for delivering roasted coffee into a seasoning container, a seasoning container, a pressurized $CO_2$ and or $N_2$ source that is connected with the interior of the seasoning container, a controlled valve for allowing the air to go out of said container as the coffee and $CO_2$ and/or $N_2$ come in ; valves for controlling the gas pressure in said container, means for controlling the $O_2$ percentage in said container, a valve for making the seasoned roasted coffee to fall on a conveyor that moves said coffee into a separator that separes the air from the coffee, an apparatus that moves the coffee into a distributor and therefrom into stabilization containers that are opened for a flow of humidified air and is characterized in that it comprises means adapted to lead the coffee temperature to the desired value in the seasoning container, according to the process, and to keep the coffee in the container at such a temperature through a desired time period, according to the process. Particularly the plant comprises : a warm fluid source under controlled temperature so as to keep the fluid at a value adapted to keep the coffee in said container at a desired value of temperature, a liner around the seasoning container in order to create an interspace between the liner internal wall and the container external wall ; controlled means for supplying and circulating a convenient quantity of said warm fluid into the interspace and for allowing said fluid to come out therefrom ; means for taking the temperature of said fluid in the interspace and the one of the coffee into the seasoning container.

Alternatively the plant comprises a duct that is wound up as a coil on the external surface of the seasoning container, means for supplying and circulating a convenient quantity of said warm fluid into the above duct ; means for taking the temperature of said fluid in said duct and of the coffee in the seasoning container.

It will be realized that the warm fluid could be a liquid one, such as water, or a gas, such as air, and that the controlling of the warm fluid temperature, as supplied from such a fluid source shall take into account that the roasted coffee may be delivered into the seasoning container a little after the roasting completion, the coffee being at high temperature, or much after the roasting completion, the coffee being at room temperature or a little higher than room temperature.

The temperature gap in the invented process, from 30°C to 50°C, was determined by the following facts as a result of researches and tests : the 30°C lower value is the one causing a reduction of the process duration yet advantageous and valuable with respect to the duration of the known process, viz. a reduction upto ten days with respect to the duration which may arrive up to twenty one days in the known process ; it is obvious that said lower value can be reduced evenmore, but when comparing the advantages to the plant and process costs, they would be very little. The 50°C higher value, is the one not to be overcome in order to avoid a too much rapid gas evolving from the roasted coffee beans which could cause a non-controlled loss of the coffee flavours and then a bad product.

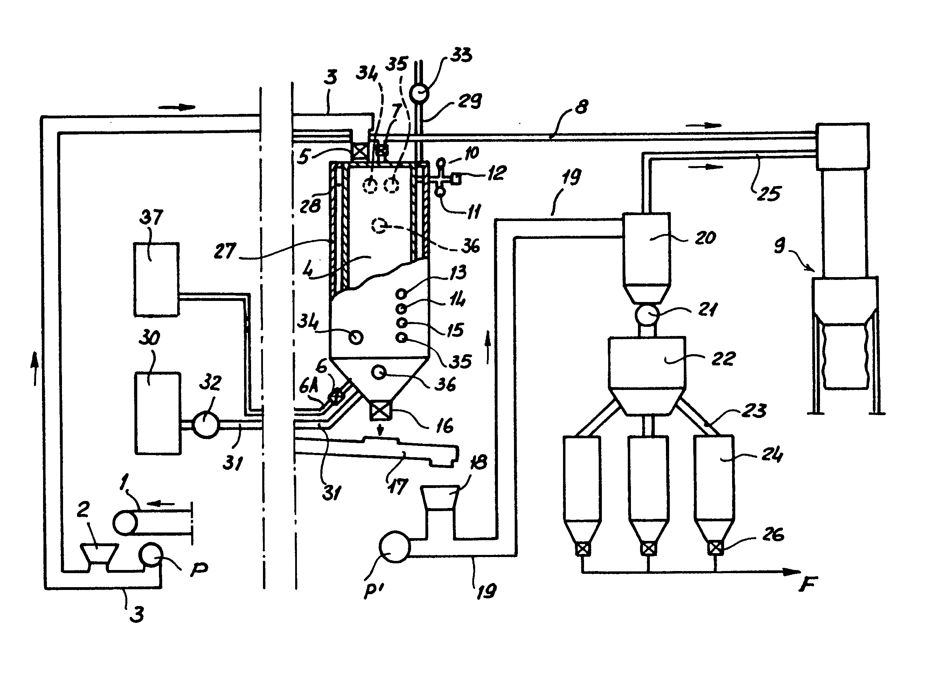

The invented process and plant will be described in detail in the following, with reference to the example as illustrated in the attached drawing having a sole figure.

The attached drawing is took up from the European Patent 0 092 803. In the attached drawing only one seasoning container 4 is shown ; in the following the operation of the parts that are equal to the ones according to the above European Patent drawing, is not described : only a list of said equal parts is supplied herebelow :

- 1 conveyor for freshly roasted coffee ;
- 2 hopper for freshly roasted coffee ;
- 3 first pneumatic apparatus for delivering coffee (in which P is a pump) ;
- 4 seasoning container ;
- 5, 6, 7, 10, 11, 16, 26 valves ;
- 8 air outlet duct ;
- 9 air filter ;
- 12 $O_2$ percentage automatic analizer ;
- 13 pressure gauge ;
- 14 rapid gas exhausting valve ;
- 15 acoustic alarm device for internal high pressure ;
- 17 vibratory duct for seasoned coffee ;
- 18 hopper ;
- 19 second pneumatic apparatus for delivering coffee (in which P' is a pump) ;
- 20 centrifugal dust separator ;
- 21 rotating value for coffee passing through ;
- 22 rotating coffee distributor ;
- 23 distribution ducts ;
- 24 stabilization containers ;
- 25 air duct.

The caracterizing parts of the invented plant are illustrated herebelow.

A liner 27 is provided all around the seasoning container 4 and is spaced from it so as to form a closed interspace 28. The interspace 28 is connected upwards with the external air through the duct 29 and downwards, through the duct 31, with the warm air generator 30. A variable-displacement fan 32 positioned along the duct 31, blows warm air into the interspace 28. A valve 33 allows the controlling of the air quantity going out from the duct 29. Thermometers 34 indicate the air temperature in the interspace 28 and thermometers 35 indicate the coffee temperatures in the seasoning container 4. Thermostats 36 are adapted to control coffee temperature in the seasoning container 4 by driving the operation of the warm air generator 30. The source of pressurized $CO_2$ is referred to by 37.

Since it was choosed to carry out a process by keeping the coffee in the container 4 at a temperature of 45°C, it will be processed as follows. When a lot of coffee having a temperature of about 30°C begins to enter the seasoning container 4 by means of the pneumatic apparatus 3, the warm air generator is driven so as to produce warm air at a temperature conveniently higher than 45°C. When the container 4 has been filled, one shall wait for the moment in which the coffee temperature arises from 30°C to 45°C so that the warm air generator will produce air at a temperature a little higher than 45°C in order to keep the coffee at 45°C and balance the heat losses along the duct 31 and through the external wall of the liner 27 even if suitably insulated. After 5,5 days the coffee has been delivered to the conditioning container, the coffee is transferred into the stabilization containers 24 and the conditioning container receives another lot of roasted coffee. Alternatively, after 5,5 days the coffee has been delivered to the conditioning container, a room temperature air stream is blown in order to adjust to the room temperature the coffee temperature into said container and then to transfer the coffee into the stabilization containers 24. Further alternatively, after 5,5 days the coffee has been delivered to the conditioning container, the coffee is removed from said container and its temperature is reduced to room temperature during its transferring into the stabilization container 24. Such a temperature reduction is reached through any known means, for instance : by ventilating the coffee, naturally or by means of a fan, while moving along the vibratory duct 17, or by blowing air at room temperature into the second pneumatic apparatus 19.

Finally, the duct 29 instead of liberating outwards the warm air circulated into the interspace 28, takes back said air into the duct 31 section that is comprised between the generator 30 and the fan 32, in order to carry out a convenient energy regeneration.

## Claims

1. A process for treating roasted coffee, comprising a first step, divided in two stages, in which coffee is seasoned in an air-tight seasoning container (4), and a second step in which the seasoned coffee is stabilized in stabilization containers (24) that are opened to a flow of air, during the first stage first roasted coffee being delivered into the seasoning container (4), then pressurized $CO_2$ or $N_2$ being delivered into the seasoning container (4) for removing most of the air from the interior of the container (4), during the second stage the gas pressure in the interior of the seasoning container (4) being got immediately to at least 0,4 Atm and then being able to be raised and kept at up to 1,8 Atm, characterized in that the $O_2$ percentage in the seasoning container (4) is kept between 0,2% and 2% and that during the first step of the process the roasted coffee in the seasoning container (4) is kept at a desired temperature between 30°C and 50°C through a time period of between ten to four days, of ten days if the temperature of the coffee is 30°C or of a lower number of days inversely proportional to the temperature of the coffee, so of four days if the temperature of the coffee is 50°C.

2. A process for treating roasted coffee according to claim 1, characterized in that the roasted coffee is kept in the seasoning container (4) at a temperature of 40°C through about seven days.

3. A plant for carrying out the process according to claims 1, 2 comprising means for delivering roasted coffee into a seasoning container (4), a seasoning container (4), a pressurized $CO_2$ and/or $N_2$ source (37) that is connected with the interior of the seasoning container (4), control means for allowing the air to come out from said container (4) as the coffee and $CO_2$ and/or $N_2$ come in ; valves for controlling gas pressure in said container (4), means for controlling $O_2$ percentage in the above container (4), a valve (16) for making the seasoned roasted coffee to fall on a conveyor (17) that moves said coffee into a separator (20) that separes air from coffee, an apparatus (21) that moves the coffee into a distributor (22) and therefrom into stabilization containers (24) that are opened for a flow of humidified air and is characterized in that it comprises means (30-31-28) adapted to lead the coffee temperature to the desired value into the seasoning container (4) according to the process and to keep the coffee in the container (4) at such a temperature through the desired time period, according to the process.

4. A plant according to claim 3, characterized in that it comprises a warm fluid source (30) under controlled temperature so as to keep the fluid at a value adapted to keep the coffee in said container (4) at a desired value of temperature, a liner (27) around the seasoning container (4) in order to create an interspace (28) between the liner internal wall and the container external wall, controlled means for supplying and circulating a convenient quantity of said warm fluid into the interspace (28) and for allowing said fluid to come out therefrom ; means for taking the temperature of said fluid in the interspace (28) and the coffee temperature in the seasoning container (4).

5. A plant according to claim 3, characterized in that it comprises a warm fluid source (30) under controlled temperature so as to keep the fluid at a value adapted to keep the coffee in that above container (4) at a desired value of temperature, a duct wound as a coil on the external surface of the seasoning container (4), means for delivering and circulating a convenient quantity of said warm fluid into the above duct, means for taking the temperature of said fluid in said duct and the coffee temperature in the seasoning container (4).

## Ansprüche

1. Verfahren zur Behandlung gerösteten Kaffees, welches einen ersten in zwei Phasen unterteilten Schritt, bei welchem Kaffee in einem luftdichten Reifecontainer (4) gereift wird, und einen zweiten Schritt aufweist, bei welchem der gereifte Kaffee in Stabilisierungscontainern (24) stabilisiert wird, welche für einen Luftstrom geöffnet sind, wobei während der ersten Phase zuerst gerösteter Kaffee in den Reifecontainer (4) eingebracht wird, dann $CO_2$ oder $N_2$ unter Druck in den Reifecontainer (4) abgegeben wird, um den größten Teil der Luft aus dem Inneren des Containers (4) zu entfernen, wobei während der zweiten Phase der Gasdruck im Inneren des Reifecontainers (4) unmittelbar auf mindestens 0,4 Atm gebracht wird und dann auf 1,8 Atm angehoben und gehalten werden kann, dadurch gekennzeichnet, daß der $O_2$-Gehalt im Reifecontainer (4) zwischen 0,2% und 2% gehalten wird und daß während des ersten Schritts des Verfahrens der geröstete Kaffee im Reifecontainer (4) auf einer gewünschten Temperatur zwischen 30°C und 50°C während einer Zeitperiode von zwischen zehn bis vier Tagen gehalten wird, von zehn Tagen, wenn die Temperatur des Kaffees 30°C beträgt, oder von einer geringeren Anzahl von Tagen umgekehrt proportional zur Temperatur des Kaffees, demnach von vier Tagen, wenn die Temperatur des Kaffees 50°C beträgt.

2. Verfahren zur Behandlung gerösteten Kaffees nach Anspruch 1, dadurch gekennzeichnet, daß der geröstete Kaffee im Reifecontainer (4) auf einer Temperatur von 40°C ungefähr sieben Tage hindurch gehalten wird.

3. Anlage zur Durchführung des Verfahrens nach den Ansprüchen 1 und 2, welche Mittel zum Einbringen gerösteten Kaffees in einen Reifecontainer (4), eine Druckquelle für $CO_2$ und/oder $N_2$ (37), welche mit dem Inneren des Reifecontainers (4) verbunden ist, Steuereinrichtungen, welche der Luft erlauben, aus dem genannten Container (4) auszutreten, wenn der Kaffee und $CO_2$ und/oder $N_2$ eintreten ; Ventile zur Steuerung des Gasdrucks im genannten Container (4), Einrichtungen zur Steuerung des $O_2$-Prozentgehalts im genannten Container (4), ein Ventil (16), um den gereiften gerösteten Kaffee auf ein Förderband (17) fallen zu lassen, welches den genannten Kaffee in einen Separator (20) befördert, welcher Luft vom Kaffee trennt, ein Gerät (21), welches den Kaffee in einen Distributor (22) und daraus in Stabilisierungscontainer (24) befördert, welche für einen Strom von feuchtigkeitsangereicherter Luft geöffnet sind, aufweist und dadurch gekennzeichnet ist, daß sie Vorrichtungen (30, 31, 28) aufweist, welche geeignet sind, um die Kaffeetemperatur auf den verfahrensgemäß gewünschten Wert im Reifecontainer (4) zu bringen und den Kaffee im Container (4) auf solch einer Temperatur durch die verfahrensgemäß gewünschte Zeitperiode hindurch zu halten.

4. Anlage nach Anspruch 3, dadurch gekennzeichnet, daß sie eine Warmfluidquelle (30) unter kontrollierter Temperatur, um so das Fluid auf einem Wert zu halten, welcher geeignet ist, den Kaffee im genannten Container (4) auf einem gewünschten Temperaturwert zu halten, einen Mantel (27) um den Reifecontainer (4) herum, um einen Zwischenraum (28) zwischen der Mantelinnenwand und der Containeraußenwand zu schaffen, gesteuerte Einrichtungen für die Einspeisung und Zirkulation einer angemessenen Quantität von genanntem warmen Fluid in den Zwischenraum (28) und um dem genannten Fluid zu erlauben, daraus auszutreten ; Mittel, um die Temperatur von genanntem Fluid im Zwischenraum (28) und die Kaffeetemperatur im Reifecontainer (4) zu messen, aufweist.

5. Anlage nach Anspruch 3, dadurch gekennzeichnet, daß sie eine Warmfluidquelle (30) unter kontrollierter Temperatur, um so das Fluid auf einem Wert zu halten, welcher geeignet ist, den Kaffee im obigen Container (4) auf einem gewünschten Temperaturwert zu halten, eine Leitung, welche spulenartig um die Außenfläche des Reifecontainers (4) gewunden ist, Einrichtungen zur Abgabe und Zirkulation einer angemessenen Quantität von genanntem warmen Fluid in die obige Leitung, Mittel, um die Temperatur von genanntem Fluid in der genannten Leitung und die Kaffeetemperatur im Reifebehälter (4) zu messen, aufweist.

## Revendications

1. Procédé pour traiter le café torréfié, comprenant une première phase divisée en deux étapes, dans laquelle le café est soumis à une maturation dans un récipient de maturation (4) étanche à l'air et une deuxième phase dans laquelle le café qui a subi la maturation est stabilisé dans des récipients de stabilisation (24) qui sont ouverts à la circulation d'un courant d'air, le café torréfié étant tout d'abord introduit dans le récipient de maturation (4) pendant la première étape, tandis que, dans la deuxième étape, du $CO_2$ ou $N_2$ est ensuite introduit sous pression dans le récipient de maturation (4) pour éliminer la majeure partie de l'air de l'intérieur du récipient (4), la pression gazeuse dans le volume intérieur de maturation (4) étant immédiatement portée à au moins 0,4 Atm, et pouvant être ensuite portée et maintenue à 1,8 Atm, caractérisé en ce que le pourcentage de $O_2$ dans le récipient de maturation (4) est maintenu entre 0,2% et 2% et en ce que, pendant la première phase du procédé, le café torréfié contenu dans le récipient de maturation (4) est maintenu à une température désirée comprise entre 30°C et 50°C pendant un temps allant de dix à quatre jours, ce temps étant de dix jours si la température de café est de 30°C, ou d'un plus petit nombre de jours, inversement proportionnel à la température du café, par exemple de quatre jours si la température du café est de 50°C.

2. Procédé de traitement du café torréfié selon la revendication 1, caractérisé en ce que le café torréfié est maintenu dans un récipient de maturation (4) à une température de 40°C pendant environ sept jours.

3. Installation pour la mise en oeuvre du procédé selon les revendications 1 et 2, comprenant des moyens servant à débiter le café torréfié dans un récipient de maturation (4), un récipient de maturation (4), une source (37) de $CO_2$ et/ou, $N_2$ sous pression qui est reliée à l'intérieur du récipient de maturation (4), des moyens de commande servant à laisser l'air sortir dudit récipient (4) au fur et à mesure que le café et le $CO_2$ et/ou $N_2$ y pénètrent, des valves servant à commander la pression gazeuse régnant dans le récipient (4), des moyens servant à commander les pourcentages de $O_2$ contenus dans le récipient (4) précité, une valve (16) servant à laisser le café torréfié qui a subi la maturation tomber sur un transporteur (17) qui achemine ledit café à un séparateur (20) qui sépare l'air du café, un appareil (21) qui introduit le café dans un distributeur (22) et l'extrait de ce distributeur pour l'introduire dans des récipients de stabilisation (24) qui sont ouverts à la circulation d'un courant d'air humidifié, et caractérisée en ce qu'elle comprend des moyens (30-31-28) adaptés pour porter la température du café à la valeur désirée à l'intérieur du récipient de maturation (4) conformément au procédé, et pour maintenir le café contenu dans le récipient (4) à cette température pendant le temps désiré, conformément au procédé.

4. Installation selon la revendication 3, caractérisée en ce qu'elle comprend une source (30) de fluide chaud sous température contrôlée de manière à maintenir le fluide à une valeur adaptée pour maintenir le café contenu dans ledit récipient (4) à une valeur de température désirée, une chemise (27) qui entoure le récipient de maturation (4) pour créer un espace intercalaire (28) entre la surface intérieure de la chemise et la surface extérieure du récipient, des moyens commandés servant à introduire et faire circuler une quantité appropriée dudit fluide chaud dans ledit espace intercalaire (28) et à laisser ledit fluide s'en échapper ; et des moyens servant à capter la température dudit fluide contenu dans ledit espace intercalaire (28) et la température du café contenu dans le récipient de maturation (4).

5. Installation selon la revendication 3, caractérisée en ce qu'elle comprend une source de fluide chaud (30) sous température commandée de manière à maintenir le fluide à une valeur adaptée pour maintenir le café contenu dans le récipient (4) précité à une valeur de température désirée, un conduit enroulé en une bobine sur la surface extérieure du récipient de maturation (4), des moyens servant à introduire et à faire circuler une quantité appropriée dudit fluide chaud dans le conduit précité, et des moyens servant à capter la température dudit fluide contenu dans ledit conduit et la température du café contenu dans le récipient de maturation (4).